# EUROPEAN PATENT APPLICATION

(11) **EP 4 722 887 A1**
(43) Date of publication of application: **08.04.2026**
(21) Application number: 25201346.1
(22) Date of filing: 10.09.2025
(51) Int. Cl.: G06F 3/06, H04L 67/565, H04L 69/22

(54) **SYSTEMS AND METHODS OF STREAM PROCESSING ARCHITECTURE FOR VIRTUALIZED MEMORY**

(30) Priority: 01.10.2024 US 202463702134 P; 27.01.2025 US 202519038701
(71) Applicant: Samsung Electronics Co., Ltd., Suwon-si, Gyeonggi-do 16677 (KR)
(72) Inventor: KI, Yang Seok, San Jose, CA 95134 (US); JUNG, Myung June, San Jose, CA 95134 (US)
(74) Representative: Kuhnen & Wacker Patent- und Rechtsanwaltsbüro PartG mbB

(57) **Abstract**

Provided are systems, methods, and apparatuses for stream processing architecture for memory pools. In one or more examples, the systems, devices, and methods include receiving a memory transaction request that includes a request header and an input data stream; determining that the request header indicates a function to execute based on the input data stream; determining a location to execute the function based on a location indicator of the request header, the location indicator indicating a source device of the input data stream, a destination device of an output data stream, or a switch that processes data communication between the source device of the input data stream and the destination device of the output data stream; and generating the output data stream based on executing the function in relation to the input data stream.

## Description

### TECHNICAL FIELD

The disclosure relates generally to memory systems, and more particularly to systems and methods of stream processing architecture for virtualized memory.

### BACKGROUND

The present background section is intended to provide context only, and the disclosure of any concept in this section does not constitute an admission that said concept is prior art.

Virtual memory is a memory management technique that allows a computer to use storage space to extend the amount of available memory (e.g., random access memory (RAM). Virtual memory can appear to be a larger memory space, allowing programs to run as if they have more memory than is physically available. Virtual memory may move less frequently accessed data from RAM to a swap file on the storage drive when RAM is full, which may be referred to as paging or swapping.

### SUMMARY

In various embodiments, the systems and methods described herein include systems, methods, and apparatuses for stream processing architecture for virtual pools of memory. In some aspects, the techniques described herein relate to a method of stream processing, the method including: receiving, at a device, a memory transaction request that includes a request header and an input data stream; determining that the request header indicates a function to execute based on the input data stream, the function being executed via at least one of a set of execution units (e.g., parallel execution units) of the device; determining a location to execute the function based on a location indicator of the request header, the location indicator indicating a source device of the input data stream, a destination device of an output data stream, or a switch that processes data communication between the source device of the input data stream and the destination device of the output data stream; and generating the output data stream based on executing the function according to the request header.

In some aspects, the techniques described herein relate to a method, wherein: the input data stream includes one or more values, and the function includes determining at least one of a maximum value of the one or more values, a minimum value of the one or more values, an average value of the one or more values, at least one value of the one or more values that satisfies an inequality indicated in the request header, or a value of the input data stream that equals a value indicated in the request header.

In some aspects, the techniques described herein relate to a method, wherein the function includes performing at least one of an encryption operation on at least a portion of the input data stream, a decryption operation on at least the portion of the input data stream, or a data integrity checksum on at least the portion of the input data stream.

In some aspects, the techniques described herein relate to a method, further including selecting the source device of the input data stream as the location to execute the function based on a performance policy of the request header indicating a traffic reduction policy.

In some aspects, the techniques described herein relate to a method, further including selecting the source device of the input data stream as the location to execute the function based on a property of the request header indicating an order of execution for a first operation and a second operation, the first operation or the second operation being associated with the function or a second function.

In some aspects, the techniques described herein relate to a method, further including selecting the destination device of the output data stream as the location to execute the function based on the function being performed on one or more (e.g., at least a majority of) values included in the input data stream.

In some aspects, the techniques described herein relate to a method, further including selecting the switch as the location to execute the function based on the function including at least one of an all reduce operation, an operation to communicate (e.g., broadcast) the output data stream to multiple destinations, wherein at least a portion of a functionality of the switch is based on a cache coherent protocol.

In some aspects, the techniques described herein relate to a method, wherein: the device includes the source device of the input data stream, the destination device of the output data stream, or the switch, the source device of the input data stream includes a source host, and the destination device of the output data stream includes a destination host.

In some aspects, the techniques described herein relate to a method, further including splitting execution of the function across the set of execution units based on a performance policy of the request header indicating a throughput policy (e.g, maximize throughput policy).

In some aspects, the techniques described herein relate to a method, further including using a first subset of the set of execution units to execute the function based on a performance policy of the request header indicating a performance policy (e.g., performance isolation policy).

In some aspects, the techniques described herein relate to a method, further including using a second subset of the set of execution units to execute a second function based on the performance policy of the request header implementing the performance policy (e.g., performance isolation policy), the second subset being different from the first subset.

In some aspects, the techniques described herein relate to a method, further including determining, based on a format indicator of the request header, a format to implement on at least a portion of the input data stream.

In some aspects, the techniques described herein relate to a method, further including determining that the request header indicates an amount of memory to allocate for stream processing based on an output data length indicated in the request header.

In some aspects, the techniques described herein relate to a method, further including determining an input data location associated with the input data stream based on an input data offset indicated in the request header.

In some aspects, the techniques described herein relate to a method, further including determining an output data location associated with an output data stream based on an output data offset indicated in the request header.

In some aspects, the techniques described herein relate to a device including: one or more processors; and memory storing instructions that, when executed by the one or more processors, cause the device to: receive, at the device, a memory transaction request that includes a request header and an input data stream; determine that the request header indicates a function to execute based on the input data stream, the function being executed via at least one of a set of execution units of the device; determine a location to execute the function based on a location indicator of the request header, the location indicator indicating a source device of the input data stream, a destination device of an output data stream, or a switch that processes data communication between the source device of the input data stream and the destination device of the output data stream; and generate the output data stream based on executing the function according to the request header.

In some aspects, the techniques described herein relate to a device, wherein: the input data stream includes one or more values, and the function includes determining at least one of a maximum value of the one or more values, a minimum value of the one or more values, an average value of the one or more values, at least one value of the one or more values that satisfies an inequality indicated in the request header, or a value of the input data stream that equals a value indicated in the request header.

In some aspects, the techniques described herein relate to a non-transitory computer-readable medium storing code that includes instructions executable by a processor to: receive, at the device, a memory transaction request that includes a request header and an input data stream; determine that the request header indicates a function to execute based on the input data stream, the function being executed via at least one of a set of execution units of the device; determine a location to execute the function based on a location indicator of the request header, the location indicator indicating a source device of the input data stream, a destination device of an output data stream, or a switch that processes data communication between the source device of the input data stream and the destination device of the output data stream; and generate the output data stream based on executing the function according to the request header.

In some aspects, the techniques described herein relate to a non-transitory computer-readable medium, wherein: the input data stream includes one or more values, and the function includes determining at least one of a maximum value of the one or more values, a minimum value of the one or more values, an average value of the one or more values, at least one value of the one or more values that satisfies an inequality indicated in the request header, or a value of the input data stream that equals a value indicated in the request header.

A computer-readable medium is disclosed. The computer-readable medium can store instructions that, when executed by a computer, cause the computer to perform substantially the same or similar operations as described herein are further disclosed. Similarly, non-transitory computer-readable media, devices, and systems for performing substantially the same or similar operations as described herein are further disclosed.

The systems and methods of stream processing architecture for virtual pools of memory described herein include multiple advantages and benefits. For example, the systems and methods provide more consistent memory bandwidth and lower latency based on the provided virtual pool of memory (VPoM) architecture. The systems and methods provide improved coherence management schemes and VPoM's performance enhancement features such as prefetch and stream processing. The systems and methods minimize the compute bottleneck (e.g., of an aggregation node) and reduce traffic overhead (e.g., in the interconnect network of VPoM systems).

### BRIEF DESCRIPTION OF THE DRAWINGS

The above-mentioned aspects and other aspects of the present systems and methods will be better understood when the present application is read in view of the following figures in which like numbers indicate similar or identical elements. Further, the drawings provided herein are for purpose of illustrating certain embodiments only; other embodiments, which may not be explicitly illustrated, are not excluded from the scope of this disclosure.

These and other features and advantages of the present disclosure will be appreciated and understood with reference to the specification, claims, and appended drawings, wherein:
FIG. 1 illustrates an example system in accordance with one or more implementations as described herein.
FIG. 2 illustrates details of the system of FIG. 1, according to one or more implementations as described herein.
FIG. 3 illustrates an example system in accordance with one or more implementations as described herein.
FIG. 4 illustrates an example system in accordance with one or more implementations as described herein.
FIG. 5 depicts an example data structure in accordance with one or more implementations as described herein.
FIG. 6 illustrates an example system in accordance with one or more implementations as described herein.
FIG. 7 depicts an example data structure in accordance with one or more implementations as described herein.
FIG. 8 depicts a flow diagram illustrating an example method associated with the disclosed systems, in accordance with example implementations described herein.
FIG. 9 depicts a flow diagram illustrating an example method associated with the disclosed systems, in accordance with example implementations described herein.

While the present systems and methods are susceptible to various modifications and alternative forms, specific embodiments thereof are shown by way of example in the drawings and will herein be described. The drawings may not be to scale.

### DETAILED DESCRIPTION OF VARIOUS EMBODIMENTS

The details of one or more embodiments of the subject matter described herein are set forth in the accompanying drawings and the description below. Other features, aspects, and advantages of the subject matter will become apparent from the description, the drawings, and the claims.

Various embodiments of the present disclosure now will be described more fully hereinafter with reference to the accompanying drawings, in which some, but not all embodiments are shown. Indeed, the disclosure may be embodied in many forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Like numbers refer to like elements throughout. Arrows in each of the figures depict bi-directional data flow and/or bi-directional data flow capabilities. The terms "path," "pathway" and "route" are used interchangeably herein.

Embodiments of the present disclosure may be implemented in various ways, including as computer program products that comprise articles of manufacture. A computer program product may include a non-transitory computer-readable storage medium storing applications, programs, program components, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In one embodiment, a non-volatile computer-readable storage medium may include a floppy disk, flexible disk, hard disk, solid-state storage (SSS) (for example a solid-state drive (SSD)), solid state card (SSC), solid state module (SSM), enterprise flash drive, magnetic tape, or any other non-transitory magnetic medium, and/or the like. A non-volatile computer-readable storage medium may include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may include read-only memory (ROM), programmable read-only memory (PROM), erasable programmable read-only memory (EPROM), electrically erasable programmable read-only memory (EEPROM), flash memory (for example Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In one embodiment, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may take the form of an entirely hardware embodiment, an entirely computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially, such that one instruction is retrieved, loaded, and executed at a time. In some example embodiments, retrieval, loading, and/or execution may be performed in parallel, such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not be necessarily all referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "predetermined," "pixel-specific," etc.) may be occasionally interchangeably used with a corresponding non-hyphenated version (e.g., "two dimensional," "predetermined," "pixel specific," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. Similarly, various waveforms and timing diagrams are shown for illustrative purpose only. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on chip (SoC), an assembly, and so forth.

The following description is presented to enable one of ordinary skill in the art to make and use the subject matter disclosed herein and to incorporate it in the context of particular applications. While the following is directed to specific examples, other and further examples may be devised without departing from the basic scope thereof.

Various modifications, as well as a variety of uses in different applications, will be readily apparent to those skilled in the art, and the general principles defined herein may be applied to a wide range of embodiments. Thus, the subject matter disclosed herein is not intended to be limited to the embodiments presented, but is to be accorded the widest scope consistent with the principles and novel features disclosed herein.

In the description provided, numerous specific details are set forth in order to provide a more thorough understanding of the subject matter disclosed herein. It will, however, be apparent to one skilled in the art that the subject matter disclosed herein may be practiced without necessarily being limited to these specific details. In other instances, well-known structures and devices are shown in block diagram form, rather than in detail, in order to avoid obscuring the subject matter disclosed herein.

All the features disclosed in this specification (e.g., any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Various features are described herein with reference to the figures. It should be noted that the figures are only intended to facilitate the description of the features. The various features described are not intended as an exhaustive description of the subject matter disclosed herein or as a limitation on the scope of the subject matter disclosed herein. Additionally, an illustrated example need not have all the aspects or advantages shown. An aspect or an advantage described in conjunction with a particular example is not necessarily limited to that example and can be practiced in any other examples even if not so illustrated, or if not so explicitly described.

It is noted that, if used, the labels left, right, front, back, top, bottom, forward, reverse, clockwise and counterclockwise have been used for convenience purposes only and are not intended to imply any particular fixed direction. Instead, the labels are used to reflect relative locations and/or directions between various portions of an object.

Data processing may include data buffering, aligning incoming data from multiple communication lanes, forward error correction (FEC), etc. For example, data may be received by an analog front end (AFE), which can prepare the incoming data for digital processing. The digital portion of the transceivers (e.g., digital signal processor (DSP)) may provide skew management, equalization, reflection cancellation, and/or other functions. It is to be appreciated that the process described herein can provide many benefits, including saving both power and cost.

Moreover, the terms "system," "component," "module," "interface," "model," or the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Unless explicitly stated otherwise, each numerical value and range may be interpreted as being approximate, as if the word "about" or "approximately" preceded the value of the value or range. Signals and corresponding nodes or ports might be referred to by the same name and are interchangeable for purposes here.

While embodiments may have been described with respect to circuit functions, the embodiments of the subject matter disclosed herein are not limited. Possible implementations may be embodied in a single integrated circuit, a multi-chip module, a single card, SoC, or a multi-card circuit pack. As would be apparent to one skilled in the art, the various embodiments might also be implemented as part of a larger system. Such embodiments may be employed in conjunction with, for example, a digital signal processor, microcontroller, field-programmable gate array, application-specific integrated circuit, or general-purpose computer.

As would be apparent to one skilled in the art, various functions of circuit elements may also be implemented as processing blocks in a software program. Such software may be employed in, for example, a digital signal processor, microcontroller, or general-purpose computer. Such software may be embodied in the form of program code embodied in tangible media, such as magnetic recording media, optical recording media, solid-state memory, floppy diskettes, CD-ROMs, hard drives, or any other non-transitory machine-readable storage medium, that when the program code is loaded into and executed by a machine, such as a computer, the machine becomes an apparatus for practicing the subject matter disclosed herein. When implemented on a general-purpose processor, the program code segments combine with the processor to provide a unique device that operates analogously to specific logic circuits. Described embodiments may also be manifest in the form of a bit stream or other sequence of signal values electrically or optically transmitted through a medium, stored magnetic-field variations in a magnetic recording medium, etc., generated using a method and/or an apparatus as described herein.

Some applications (e.g., artificial intelligence (AI), machine learning applications) may have significant memory demands. Some applications or devices may suffer from a lack of available memory resources. For example, one or more GPUs may not have sufficient memory resources to perform a given task. The processes of some systems can cause compute bottlenecks in relation to certain operations. For example, some systems may cause bottlenecks with operations associated with aggregation nodes. Similarly, the processes of some systems can result in increased traffic overhead in some system components. For example, some systems may increase traffic overhead with interconnect networks (e.g., increased traffic overhead in communication networks that connect processors and memory modules in a computer system).

The systems and methods described herein provide a stream processing architecture. The streaming architecture may be configured for VPoM systems. The systems and methods described may minimize a compute bottleneck (e.g., bottleneck of aggregation nodes). The systems and methods described may reduce traffic overhead (e.g., in interconnect networks; interconnect networks of VPoM systems, etc.). In some cases, the systems and methods described may reduce traffic overhead, reduce latency, and increase computational performance associated with one or more calculations. For example, the systems and methods may improve performance of computations associated with AI, machine learning, high-performance computing operations, etc. These computations may include computing maximum values, computing minimum values, calculating average values, and/or selecting data that satisfies an arithmetic condition (e.g., ==, >=, <=, >, <). These computations may be performed to transform data formats, to encrypt/decrypt data, to calculate data integrity checksums, etc. Accordingly, the stream processing systems and methods described help improve computer systems (e.g., improve AI operation performance).

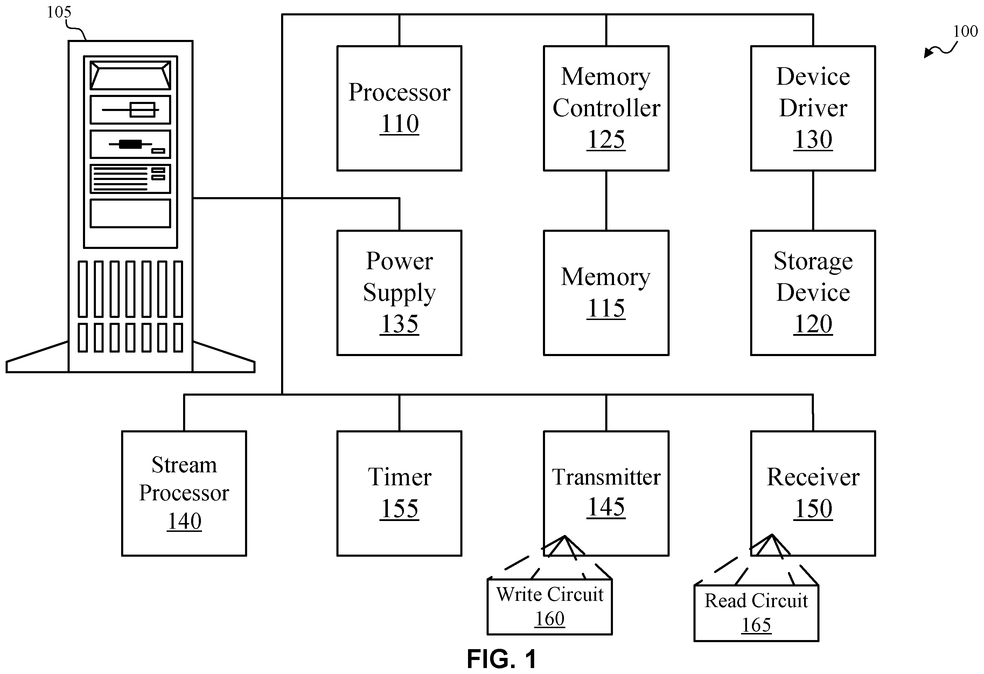

**FIG. 1** illustrates an example system 100 in accordance with one or more implementations as described herein. In FIG. 1, machine 105, which may be termed a host, a system, or a server, is shown. System 100 may be configured for prefetch mechanisms (e.g., prefetch with LLMs) based on processing sequences (e.g., LLM processing sequences) being well defined and anticipatable. In some examples, system 100 may monitor and/or trigger a prefetch action based on an indicator, such as a Before-This-Time indicator and/or on an After-This-Transaction indicator. In some cases, system 100 may provide scheduled prefetch mechanisms for virtual pools of memory based on a prefetch device architecture. While FIG. 1 depicts machine 105 as a tower computer, embodiments of the disclosure may extend to any form factor or type of machine. For example, machine 105 may be a rack server, a blade server, a desktop computer, a tower computer, a mini tower computer, a desktop server, a laptop computer, a notebook computer, a tablet computer, etc.

Machine 105 may include processor 110, memory 115, and storage device 120. Processor 110 may be any variety of processor. It is noted that processor 110, along with the other components discussed below, are shown outside the machine for ease of illustration: embodiments of the disclosure may include these components within the machine. While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM), Phase Change Memory (PCM), or Resistive Random-Access Memory (ReRAM). Memory 115 may include volatile and/or non-volatile memory. Memory 115 may use any desired form factor: for example, Single In-Line Memory Module (SIMM), Dual In-Line Memory Module (DIMM), Non-Volatile DIMM (NVDIMM), etc. Memory 115 may be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may support an operating system under which various applications may be running. These applications may issue requests (which may be termed commands) to read data from or write data to either memory 115 or storage device 120. When storage device 120 is used to support applications reading or writing data via some sort of file system, storage device 120 may be accessed using device driver 130. While FIG. 1 shows one storage device 120, there may be any number (one or more) of storage devices in machine 105. Storage device 120 may support any desired protocol or protocols, including, for example, the Non-Volatile Memory Express (NVMe) protocol, a Serial Attached Small Computer System Interface (SCSI) (SAS) protocol, or a Serial AT Attachment (SATA) protocol. Storage device 120 may include any desired interface, including, for example, a Peripheral Component Interconnect Express (PCIe) interface, or a Compute Express Link (CXL) interface. Storage device 120 may take any desired form factor, including, for example, a U.2 form factor, a U.3 form factor, a M.2 form factor, Enterprise and Data Center Standard Form Factor (EDSFF) (including all of its varieties, such as E1 short, E1 long, and the E3 varieties), or an Add-In Card (AIC).

While FIG. 1 uses the term "storage device," embodiments of the disclosure may include any storage device formats that may benefit from the use of computational storage units, examples of which may include hard disk drives, Solid State Drives (SSDs), or persistent memory devices, such as PCM, ReRAM, or MRAM. Any reference to "storage device", "SSD" below should be understood to include such other embodiments of the disclosure and other varieties of storage devices. In some cases, the term "storage unit" may encompass storage device 120 and memory 115. Machine 105 may include power supply 135. Power supply 135 may provide power to machine 105 and its components.

Machine 105 may include transmitter 145 and receiver 150. Transmitter 145 or receiver 150 may be respectively used to transmit or receive data. In some cases, transmitter 145 and/or receiver 150 may be used to communicate with memory 115 and/or storage device 120. Transmitter 145 may include write circuit 160, which may be used to write data into storage, such as a register, in memory 115 and/or storage device 120. In a similar manner, receiver 150 may include read circuit 165, which may be used to read data from storage, such as a register, from memory 115 and/or storage device 120. In the illustrated example, machine 105 may include timer 155, which may be used to time one or more operations, indicate a time period, indicate a lapse of time, indicate an expiration, indicate a timeout, etc.

In one or more examples, machine 105 may be implemented with any type of apparatus. Machine 105 may be configured as (e.g., as a host of) one or more of a server such as a compute server, a storage server, storage node, a network server, a supercomputer, data center system, and/or the like, or any combination thereof. Additionally, or alternatively, machine 105 may be configured as (e.g., as a host of) one or more of a computer such as a workstation, a personal computer, a tablet, a smartphone, and/or the like, or any combination thereof. Machine 105 may be implemented with any type of apparatus that may be configured as a device including, for example, an accelerator device, a storage device, a network device, a memory expansion and/or buffer device, a central processing unit (CPU), a graphics processing unit (GPU), a neural processing unit (NPU), a tensor processing unit (TPU), optical processing units (OPU), and/or the like, or any combination thereof.

Any communication between devices including machine 105 (e.g., host, computational storage device, and/or any intermediary device) can occur over an interface that may be implemented with any type of wired and/or wireless communication medium, interface, protocol, and/or the like including PCIe, NVMe, Ethernet, NVMe-oF, Compute Express Link (CXL), and/or a coherent protocol such as CXL.mem, CXL.cache, CXL.IO and/or the like, Gen-Z, Open Coherent Accelerator Processor Interface (OpenCAPI), Cache Coherent Interconnect for Accelerators (CCIX), Advanced eXtensible Interface (AXI) and/or the like, or any combination thereof, Transmission Control Protocol/Internet Protocol (TCP/IP), FibreChannel, InfiniBand, Serial AT Attachment (SATA), Small Computer Systems Interface (SCSI), Serial Attached SCSI (SAS), iWARP, any generation of wireless network including 2G, 3G, 4G, 5G, and/or the like, any generation of Wi-Fi, Bluetooth, near-field communication (NFC), and/or the like, or any combination thereof. In some embodiments, the communication interfaces may include a communication fabric including one or more links, buses, switches, hubs, nodes, routers, translators, repeaters, and/or the like. In some embodiments, system 100 may include one or more additional apparatus having one or more additional communication interfaces.

Any of the functionality described herein, including any of the host functionality, device functionally, stream processor 140 functionality, and/or the like, may be implemented with hardware, software, firmware, or any combination thereof including, for example, hardware and/or software combinational logic, sequential logic, timers, counters, registers, state machines, volatile memories such as at least one of or any combination of the following: dynamic random access memory (DRAM) and/or static random access memory (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application specific integrated circuits (ASICs) CPUs including complex instruction set computer (CISC) processors such as x86 processors and/or reduced instruction set computer (RISC) processors such as RISC-V and/or ARM processors), GPUs, NPUs, TPUs, OPUs, and/or the like, executing instructions stored in any type of memory. In some embodiments, one or more components of stream processor 140 may be implemented as an SoC.

In some examples, stream processor 140 may include any one or combination of logic (e.g., logical circuit), hardware (e.g., processing unit, memory, storage), software, firmware, and the like. In some cases, stream processor 140 may perform one or more functions in conjunction with processor 110. In some cases, at least a portion of stream processor 140 may be implemented in or by processor 110 and/or memory 115. The one or more logic circuits of stream processor 140 may include any one or combination of multiplexers, registers, logic gates, arithmetic logic units (ALUs), cache, computer memory, microprocessors, processing units (CPUs, GPUs, NPUs, and/or TPUs), FPGAs, ASICs, etc., that enable stream processor 140 to provide systems of stream processing architecture and methods of implementing stream processing architecture that improve the performance characteristics of virtual pools of memory.

In one or more examples, stream processor 140 may receive a memory transaction request that includes a request header and an input data stream and determine that the request header indicates a function to execute in relation to the input data stream. In some cases, the stream processor 140 may determine a location to execute the function based on a location indicator of the request header and generate an output data stream based on executing the function according to the request header.

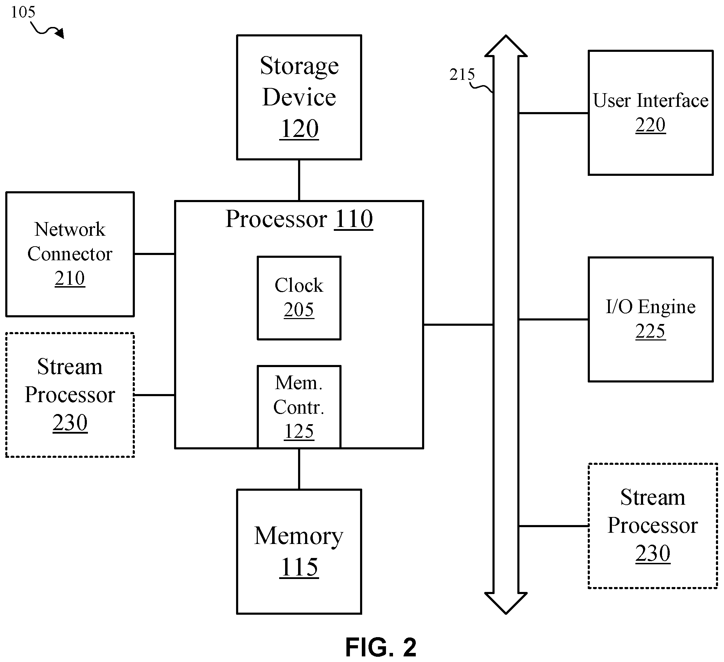

**FIG. 2** illustrates details of machine 105 of FIG. 1, according to examples described herein. In the illustrated example, machine 105 may include processor 110. Processor 110 may include one or more processors and/or one or more dies. Processor 110 may include memory controller 125 (e.g., one or more memory controllers) and clock 205 (e.g. one or more clocks), which may be used to coordinate the operations of the components of the machine. Processor 110 may be coupled to memory 115 (e.g., one or more memory chips, stacked memory, etc.), which may include random access memory (RAM), read-only memory (ROM), or other state preserving media, as examples. Processor 110 may be coupled to storage device 120 (e.g., one or more storage devices), and to network connector 210, which may be, for example, an Ethernet connector or a wireless connector. Processor 110 may be connected to bus 215 (e.g., one or more buses), to which may be attached user interface 220 (e.g., one or more user interfaces) and Input/Output (I/O) interface ports that may be managed using I/O engine 225 (e.g., one or more I/O engines), among other components. As shown, processor 110 may be coupled to stream processor 230, which may be an example of stream processor 140 of FIG. 1. Additionally, or alternatively, processor 110 may be connected to bus 215, to which may be attached stream processor 230.

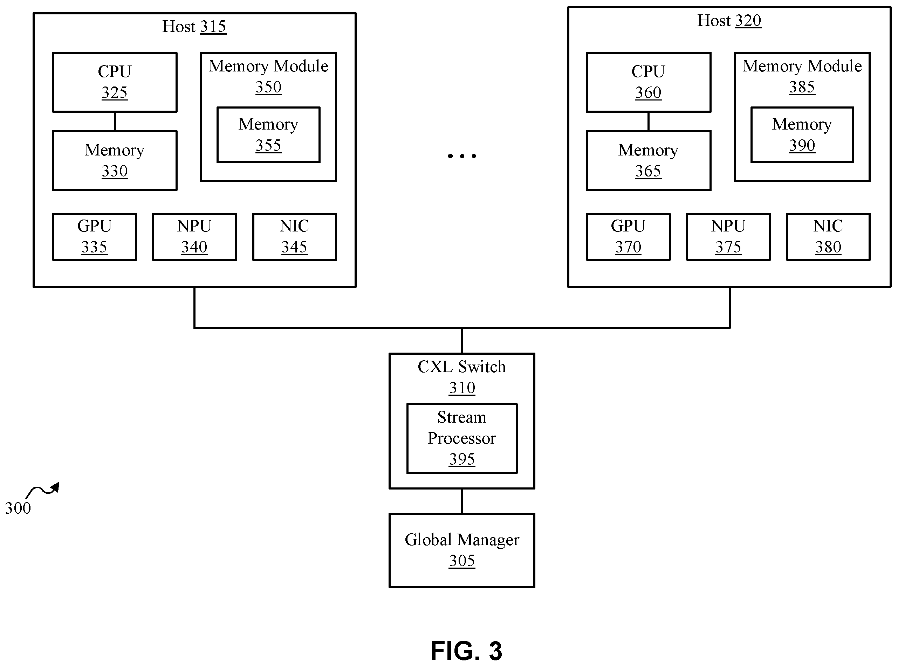

**FIG. 3** illustrates an example system 300 in accordance with one or more implementations as described herein. In some configurations, one or more aspects of system 300 may be implemented by or in conjunction with machine 105, components of machine 105, or any combination thereof. System 300 may provide a high-performance computing environment and may be part of a data center. In some cases, system 300 may provide compute resources for artificial intelligence, machine learning, cloud computing, etc.

In the illustrated example, system 300 may include global manager 305, CXL switch 310 (e.g., a data communication switch based on a cache coherent protocol), and one or more host machines (e.g., host 315, host 320, etc.). As shown, CXL switch 310 may include stream processor 395. In some examples, one or more aspects of system 300 may be implemented by or in conjunction with stream processor 140 of FIG. 1, stream processor 230 of FIG. 2, and/or stream processor 395.

The one or more host machines may be examples of machine 105. In some cases, global manager 305 may be configured as a global manager over one or more virtual pools of memory (e.g., manager over at least one virtual pool of memory that includes memory pooled from memory modules of multiple host machines). CXL switch 310 may enable multiple devices (e.g., host 315, host 320) to connect and communicate over the Compute Express Link (CXL) protocol. CXL switch 310 may be configured as a hub to manage data flow between various CPUs, accelerators, and memory devices of system 300, enabling virtual pooling of memory and high-speed data transfer across the network of connected components of system 300. CXL switch 310 may be based on the PCIe physical layer and may utilize a CXL cache-coherent protocol for efficient memory access across different devices of system 300.

As shown, host 315 may include one or more processors (e.g., CPU 325), memory 330 connected to CPU 325 (e.g., system memory, main memory, DRAM). In some cases, CPU 325 may initiate or generate a memory transaction request. In some cases, host 315 may include GPU 335 and/or NPU 340. As shown, host 315 may include network interface card (NIC) 345, which may be configured to enable host 315 to communicate with CXL switch 310, one or more hosts (e.g., host 320), and/or global manager 305. As shown, host 315 may include memory module 350, which may include at least one memory (e.g., memory 355). In some cases, memory of host 315 (e.g., memory 330 and/or memory 355) may be managed by memory module 350. In some cases, memory module 350 may manage one or more aspects of virtual pooling of memory. In some examples, memory module 350 may manage one or more aspects of prefetch mechanisms for virtual pools of memory. In some cases, memory module 350 may manage virtual pools of memory in conjunction with global manager 305.

As shown, host 320 may include one or more processors (e.g., CPU 360), memory 365 connected to CPU 360 (e.g., system memory, main memory, DRAM). In some cases, host 320 may include GPU 370 and/or NPU 375. As shown, host 320 may include NIC 380, which may be configured to enable host 320 to communicate with CXL switch 310, one or more hosts (e.g., host 315), and/or global manager 305. As shown, host 320 may include memory module 385, which may include at least one memory (e.g., memory 390). In some cases, memory of host 320 (e.g., memory 365 and/or memory 390) may be managed by memory module 385. In some cases, memory module 385 may manage one or more aspects of virtual pooling of memory. In some examples, memory module 385 may manage one or more aspects of prefetch mechanisms for virtual pools of memory. In some cases, memory module 385 may manage virtual pools of memory in conjunction with global manager 305. In one or more examples, CXL switch 310 may communicate with host 315 and/or components of host 315 via NIC 345. In some examples, CXL switch 310 may communicate with host 320 and/or components of host 320 via NIC 380. Host 315 and/or components of host 315 may communicate with host 320 and/or components of host 320 via NIC 345 and NIC 380. In some cases, communication between devices may include communication of data, control signals, etc.

The systems and methods described herein may be based on and/or may include virtual memory pools. A virtual memory pool can include mechanisms that manage memory allocation in a computing system. Instead of allocating memory as needed on a case-by-case basis, a virtual memory pool may pre-allocate a block of memory and divide the block into smaller chunks, as may be done by various processes. Virtual memory pools can be accessed at the operating system level and/or the application level. At the application level, a pool can be accessed through a networked file system or an API. At the operating system level, a page cache can use the pool as a large memory resource.

The systems and methods described herein may be based on and/or may include Compute Express Link (CXL) memory. CXL memory can include memory with a high-speed interface that allows for communication between devices, such as processors, memory, accelerators, storage, and other IO devices. CXL memory can be designed for high-performance data center computers and may use a Peripheral Component Interconnect Express (PCIe) physical and/or electrical interface.

The systems and methods described herein may be based on and/or may include artificial intelligence (AI). AI can include the concept of creating intelligent machines that can sense, reason, act, and adapt. Machine learning (ML) may be a subset of AI that helps build AI-driven applications. The systems and methods described herein may be based on and/or may include deep learning algorithms. Deep learning algorithms can use large amounts of data and complex algorithms to train a model. Neural networks can be the foundation of deep learning algorithms. In machine learning, AI inference can include the process of using a trained model to make predictions. In some cases, AI training can be typically a first step in a two-part process of machine learning.

The systems and methods described herein may be based on and/or may include a neural processing unit (NPU). NPUs can include a specialized processor that executes machine learning algorithms. NPUs are also called AI accelerators or intelligent processing units (IPUs). NPUs improve the inference performance of neural networks. NPUs work similarly to the human brain. They are made up of nerve cells and synapses that transmit and receive signals to and from each other. NPUs use a data-driven parallel computing architecture to process large amounts of multimedia data, like images and videos. NPUs may be used to offload specific workloads, allowing dedicated hardware to focus on more specialized tasks.

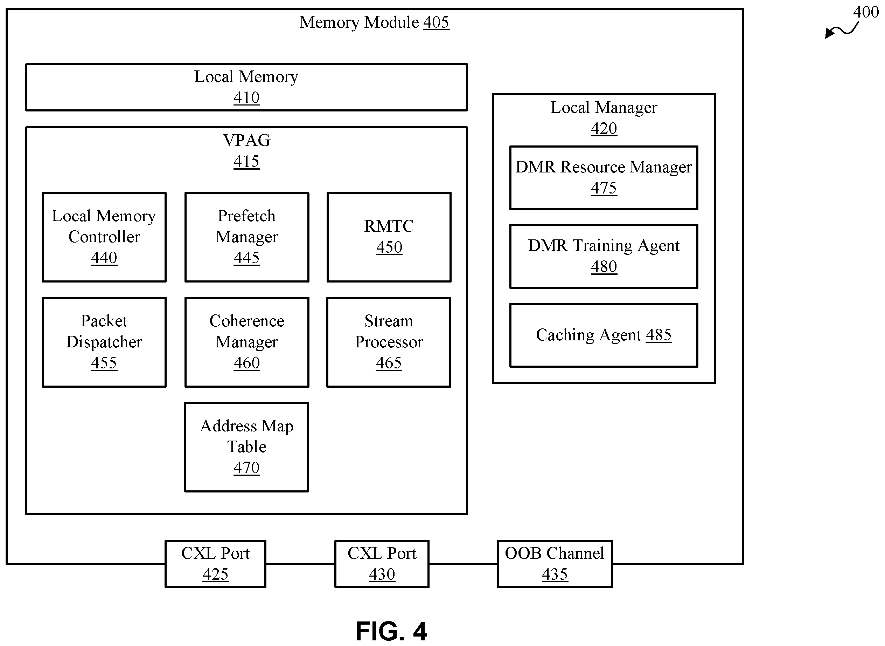

**FIG. 4** illustrates an example system 400 in accordance with one or more implementations as described herein. In some configurations, one or more aspects of system 400 may be implemented by or in conjunction with stream processor 140 of FIG. 1, stream processor 230 of FIG. 2, and/or stream processor 395 of FIG. 3. In some configurations, one or more aspects of system 400 may be implemented by or in conjunction with machine 105, components of machine 105, or any combination thereof.

In the illustrated example, system 400 may include memory module 405 (e.g., CXL memory module). In some cases, memory module 405 may be a memory module of a host machine (e.g., machine 105, host 315, host 320). Memory module 405 may be an example of memory module 350 and/or memory module 385 of FIG. 3. As shown, memory module 405 may include local memory 410, virtual pool access gateway (VPAG) 415, local manager 420, one or more CXL ports (e.g., CXL port 425, CXL port 430, etc.), and one or more out of band (OOB) channels (e.g., OOB channel 435). In some cases, a switch (e.g., CXL switch 310) may include a virtual pool access gateway (e.g., VPAG 415).

As shown, VPAG 415 may include local memory controller 440, prefetch manager 445, remote memory transaction controller (RMTC) 450, packet dispatcher 455 (e.g., memory transaction packet dispatcher), coherence manager 460, stream processor 465, and/or address map table 470. In some examples, local memory controller 440 may control one or more aspects associated with memory of memory module 405 (e.g., local memory 410). In some cases, local memory controller 440 may control memory operations (e.g., read, write, allocate, deallocate) associated with local memory 410. In some cases, local memory controller 440 may control memory operations of virtual pools of memory (e.g., memory operations of virtual pools of memory associated with local memory 410). In some cases, prefetch manager 445 may perform one or more operations described herein. For example, prefetch manager 445 may perform one or more operations associated with virtual pools of memory and/or prefetch mechanisms for virtual pools of memory. In some cases, RMTC 450 may control remote memory transactions associated with virtual pools of memory and/or prefetch mechanisms for virtual pools of memory. For example, RMTC 450 may control memory operations (e.g., read, write, allocate, deallocate, etc., associated with remote devices using virtual pools of memory). For instance, RMTC 450 may control memory operations associated with remote devices using virtual pools of memory linked to memory module 405 (e.g., linked to memory of memory module 405). In some cases, packet dispatcher 455 may control communication of packets associated with virtual pools of memory and/or prefetch mechanisms for virtual pools of memory. In some cases, packet dispatcher 455 may route packets to local and/or remote entities (e.g., remote and/or local memory, hosts, applications, etc.).

In some examples, coherence manager 460 may be configured to manage data coherence of virtual memory pools (e.g., data coherence of memory pooled between hosts, applications, etc.). In some cases, stream processor 465 may be configured to process one or more data streams from memory module 405 to one or more other devices (e.g., a host of memory module 405, a host of another memory module, an application, a remote device, etc.) and/or from the one or more other devices to memory module 405. For example, stream processor 465 may handle one or more data streams associated with data of virtual pools of memory. In some examples, address map table 470 (e.g., VPoM address map table) may be configured to manage an address mapping table that maps virtual pools of memory associated with memory module 405, a host of memory module 405, applications that use the virtual pool of memory, other devices, etc. For example, address map table 470 may manage address translations between virtual memory of a virtual pool of memory and the address of the physical memory where the data is physically stored.

As shown, local manager 420 may include Donated Memory Region (DMR) resource manager 475, DMR training agent 480 (e.g., DMR performance attribute training agent), and caching agent 485 (e.g., VPoM instance information caching agent). In some cases, local manager 420 may be configured to manage local aspects regarding a virtual pool of memory (e.g., local to memory module 405, local to a host machine of memory module 405, etc.). In some examples, DMR resource manager 475 may be configured to manage one or more DMR resources and/or resources associated with virtual pools of memory. In some cases, DMR training agent 480 may be configured to manage one or more DMR performances attributes. For example, DMR training agent 480 may learn, implement, and/or adjust one or more DMR performance attributes (e.g., performance attributes associated with virtual pools of memory). In some examples, caching agent 485 may cache data, metadata, and/or configurations associated with virtual pools of memory. In some cases, caching agent 485 may may configure the sharing of memory and cache resources based on the systems and methods described herein.

In some cases, CXL port 425 and/or CXL port 430 may include, respectively, a physical interface that enables memory module 405 to connect to other devices (e.g., remote hosts, remote servers, remote applications). CXL port 425 and/or CXL port 430 may enable memory module 405 to connect with a CXL interconnect that provides a high-speed connection that allows to memory modules (e.g., memory module 405) and/or hosts (e.g., host 315, host 320) to share memory and cache resources. In some cases, OOB channel 435 may provide a separate, independent transmission channel that may be configured to communicate data outside of default or main data stream channels. In some examples, CXL port 425 and/or CXL port 430 may provide a default communication channel of memory module 405 and OOB channel 435 may provide a separate, independent transmission channel of memory module 405. In some cases, CXL port 425, CXL port 430, and/or OOB channel 435 may communicate data associated with virtual pools of memory and/or prefetch mechanisms for virtual pools of memory.

System 400 provide virtual pool of memory (VPoM) mechanisms that avoid or minimize the stranded memory problem, which can happen even when a host uses CXL Memory Module (CMM) to expand the memory capacity. Stranded memory is a problem that can occur when a server has memory that is available, but cannot be used because all of the server's cores are allocated (e.g., to virtual machines (VMs)). This can happen when the DRAM-to-core ratio of the VMs doesn't match the server's resources. Stranded memory issues increase power consumption and cooling resource usage, resulting in wasted energy and expenses, which leads to DRAM inefficiencies.

System 400 may be used in a large-scale high-performance computing system, such as inference/training systems for large language models, and/or high-performance computing systems. The systems and methods described provide a VPoM system architecture and VPoM operations to create and to use (e.g., read/write) VPoM instances, which may include methods to build address space, and methods to route memory transaction request packets. The systems and methods provide features that avoid or minimize performance bottlenecks of VPoM systems.

Based on the systems and methods described herein, system 400 can include a shared memory system virtually constructed with a set of donated memory regions from individual CXL Memory Modules (CMMs). System 400 provides a VPoM architecture that improves system performance, increases memory bandwidth, and lowers latency (e.g., compared to centralized and physical CXL memory pools). System 400 provides a coherence management scheme (e.g., via coherence manager 460) and VPoM performance enhancement features (e.g., prefetch processing, stream processing via stream processor 465) that improve system performance (e.g., minimize performance bottlenecks).

System 400 may provide a stream processing architecture for VPoM systems via stream processor 465. Stream processing via stream processor 465 may minimize a compute bottleneck (e.g., of aggregation nodes) and reduce traffic overhead (e.g., in the interconnect network of VPoM systems). In some cases, stream processor 465 may be configured to find a maximum value or minimum value, to calculate average value, to select data which satisfy the arithmetic condition (==, >=, <=, >, <), to transform a data format, to encrypt/decrypt data, to calculate the data integrity checksum, etc. The stream processing provided by stream processor 465 improves AI and high-performance computing operations.

VPoM systems (e.g., system 400) may be include large-scale high-performance computing systems, such as AI inference/training systems for large language model, and/or a mixture of high-performance systems. Based on the systems and methods described herein, a VPoM system can include a shared memory system virtually constructed with a set of donated memory regions from individual CXL Memory Modules (CMMs) (e.g., memory module 405).

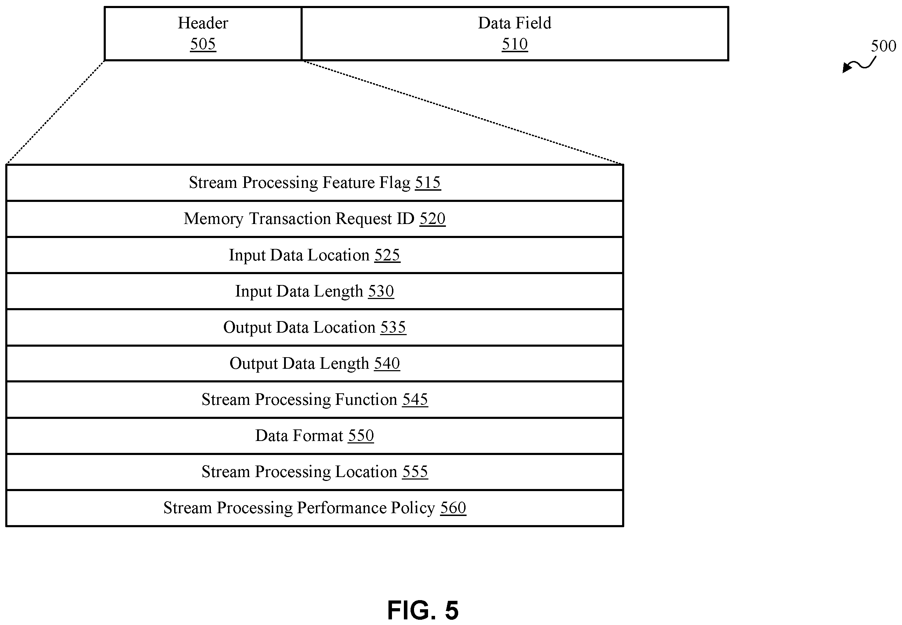

**FIG.** 5 illustrates an example data structure 500 in accordance with one or more implementations as described herein. In some configurations, one or more aspects of data structure 500 (e.g., processing of data structure 500) may be implemented by or in conjunction with stream processor 140 of FIG. 1, stream processor 230 of FIG. 2, stream processor 395 of FIG. 3, and/or stream processor 465 of FIG. 4. In some configurations, one or more aspects of data structure 500 (e.g., processing of data structure 500) may be implemented by or in conjunction with machine 105, components of machine 105, or any combination thereof.

In the illustrated example, data structure 500 may include header 505 and data field 510. Although data structure 500 depicts a certain number of fields and an order for the fields of header 505, header 505 may include more or less fields and the fields of header 505 may be implemented in any order or any possible sequence. In some cases, information in header 505 may be provided as VPoM system capability information, which may be used to select functions to be executed in stream processing.

In some examples, data structure 500 may be associated with a memory transaction request. For example, data structure 500 may be a packet of a memory transaction request. In some cases, header 505 (e.g., message header, a header of a packet, a header of a memory transaction request) may include settings, configuration information, etc. Data field 510 may include data and/or metadata included in a message (e.g., data included in a data field of a packet, data included in a data field of a memory transaction request).

In some examples, a header processor may process information in header 505 and a data processor may process data in data field 510. In some cases, a header processor may process information in header 505 to configure a data processor. For example, a header processor may parse header 505, determine a setting based parsing header 505, and configure data processor based on the setting. Based on this configuration, the data processor may execute a function of memory transaction request. In some cases, the data processor may modify or update one or more fields of header 505 based on executing the function.

As shown, header 505 may include one or more fields, which may include at least one of stream processing feature flag 515, memory transaction request ID 520, input data location 525, input data length 530, output data location 535, output data length 540 (e.g., maximum output data length), stream processing function 545, data format 550, stream processing location 555, and/or stream processing performance policy 560. It is noted that the illustrated elements of header 505 may represent a field of header 505 and/or information in a field of header 505. For example, output data location 535 may represent an output data location field and/or information in an output data location field; output data length 540 may represent an output data length field and/or information in an output data length field; stream processing function 545 may represent a stream processing function field and/or information in a stream processing function field, and so on.

In some examples, stream processing feature flag 515 may enable stream processing. When stream processing feature flag 515 is set to ON (e.g., Stream-Processing-Feature-On), then a stream processor may perform the requested stream processing function (e.g., based on information specified in fields of header 505). When stream processing feature flag 515 is set to OFF, stream processing may not be performed.

Memory transaction request ID 520 may indicate an identifier of a memory transaction request. In some cases, the request identifier may be linked to input data and/or output data. In some cases, the request identifier may be linked to a source of the input data and/or a destination of the output data.

Input data location 525 may include a field of header 505 that includes information indicating a location of input data (e.g., input data stream). Input data length 530 may include a field of header 505 that includes information indicating a length of the input data. In some examples, a stream processor (e.g., stream processor 465) may read and process data of data field 510 that is of a length specified by input data length 530 and at a location specified by input data location 525.

Output data location 535 may include a field of header 505 that includes information indicating a location of output data (e.g., output data stream). In some cases, input data location 525 may include an offset for the location of input data (e.g., of an input data stream). Additionally, or alternatively, output data location 535 may include an offset for the location of output data (e.g., of an output data stream). An offset may indicate a distance from a base location in memory. An offset may be a value that is added to or subtracted from a starting point to access a memory location (e.g., an n-bit offset to provide a range of bytes to branch to; a page offset combined with a page number to obtain a physical address; number offset bits that indicate which byte to access from a cache line, etc.). Output data processed by a stream processor (e.g., stream processor 465) may be stored at a memory location specified by output data location 535.

In some cases, output data length 540 may be used to allocate memory for output from stream processing. Information in output data length 540 may be used (e.g., by VPAG 415) to allocate memory to store stream processing output data. The stream processing output data may include a result from executing a stream processing function specified in stream processing function 545.

In some examples, stream processing function 545 may specify a function to execute in relation to a memory transaction request (e.g., specify one or more functions to be performed on input data). In some cases, stream processing function 545 may provide a list of supported stream processing functions. In some cases, stream processing function 545 may include a uniform resource locator (URL) to specify a function. In some cases, stream processing function 545 may include an identifier or index to specify a function. Examples of stream processing functions specified by stream processing function 545 may include (but are not limited to): find a maximum value, find a minimum value, calculate an average value, encrypt data, decrypt data, calculate a data integrity checksum, calculate softmax, quantize data, transform a data format, find data or values of data field 510 that satisfy an arithmetic condition (e.g., equal to, larger than, less than, larger than or equal to, less than or equal to), and so on.

In some examples, data format 550 may provide a unit data format for stream processing. In some cases, data format 550 may provide a list of data formats supported for stream processing (e.g., integer (INT), floating point (FP), INT4, INT8, FP4, FP8, FP16, FP32, etc.). Data format 550 may specify a format of input data, a format of output data, a format conversion to be performed on the input data and/or on the output data, etc.

In some examples, stream processing location 555 may include the location indicator that indicates a location for executing a stream processing function. In some cases, stream processing location 555 may specify Source, Destination, or Switch. For example, stream processing location 555 may indicate executing a function at a source of the input data stream (e.g., host 315, host 320), at a destination of an output data stream (e.g., host 315, host 320), or at a switch that processes data communication between the source of the input data stream and the destination of the output data stream (e.g., CXL switch 310).

In some cases, when stream processing location 555 has been set as Processing-in-the-Source-Node, stream processing may be done in source node of a given stream process (e.g., host 315, host 320). Stream processing location 555 may indicate source when the stream processing function satisfies the associative property (e.g., functions may be performed in any order, operations of a function may be performed in any order). In some cases, stream processing location 555 indicating source may be implemented based on a ratio of input data size to output data size (e.g., input/output data length ratio). For example, stream processing location 555 may indicate source when the size of output data of a stream processing function is smaller than the size of input data, such as compression of input data, max(data size), min(data size), sum(data size), sum(data size), select(select condition, data size), and so on (e.g., where "data size" may be a relatively large amount of data). Stream processing location 555 indicating source as the function location may reduce the data traffic on a given network (e.g., CXL network).

When the Stream-Processing-Location flag has been set as Processing-in-the-Destination-Node, stream processing may be done in a destination node of a given stream process (e.g., host 315, host 320). Stream processing location 555 indicating destination as the function location may be implemented when the stream processing function does not satisfy the associative property (e.g., a first function depends on a result of a second function; a first operation of a function depends on a result of a second operation of the function). In some cases, stream processing location 555 indicating destination may be implemented based on a ratio of input data size to output data size. For example, stream processing location 555 indicating destination may be implemented when the stream processing function results in the size of output data being larger than that of input data (e.g., decompression of input data). In some cases, the destination of the output data stream may be selected as the location to execute the function based on the function being performed on an entire dataset (e.g., for each value, for at least a majority of values in the dataset, etc.). For example, the destination may be selected to perform an operation (e.g., find median value) that is performed on an entire dataset.

When the Stream-Processing-Location flag has been set as Processing-in-the-Switch, Stream processing may be done in a switch (e.g., stream processor of a switch, intermediate CXL switch, CXL switch 310). Stream processing location 555 indicating switch as the function location may be implemented when the stream processing function satisfies the associative property (e.g., functions may be performed in any order, operations of a function may be performed in any order). In some cases, stream processing location 555 indicating switch may be implemented based on a ratio of input data size to output data size. For example, stream processing location 555 indicating switch may be implemented when the size of output data of a stream processing function is smaller than that of input data, such as with compression of input data, max(data size), min(data size), sum(data size), select(select condition, data size), and so on (e.g., where "data size" may be a relatively large amount of data). Stream processing location 555 indicating switch may reduce the data traffic on a given network (e.g., CXL network).

In some examples, stream processing performance policy 560 may indicate a performance policy to apply to a given memory transaction request. For example, stream processing performance policy 560 may indicate a performance policy to apply to the execution of a function indicated in the memory transaction request (e.g., indicated via stream processing function 545). In some cases, stream processing performance policy 560 may indicate a throughput maximization policy that may be included in the memory transaction request to maximize throughput when executing the function. In some cases, stream processing performance policy 560 may indicate a performance-isolation policy that may be included in the memory transaction request to isolate execution of a first function from execution of a second function. For example, based on the performance-isolation policy, a first portion of processing resources of a stream processor may be assigned to execute the first function, and a second non-overlapping portion of processing resources of the stream processor may be assigned to the second function (e.g., performance of the first function isolated from performance of the second function).

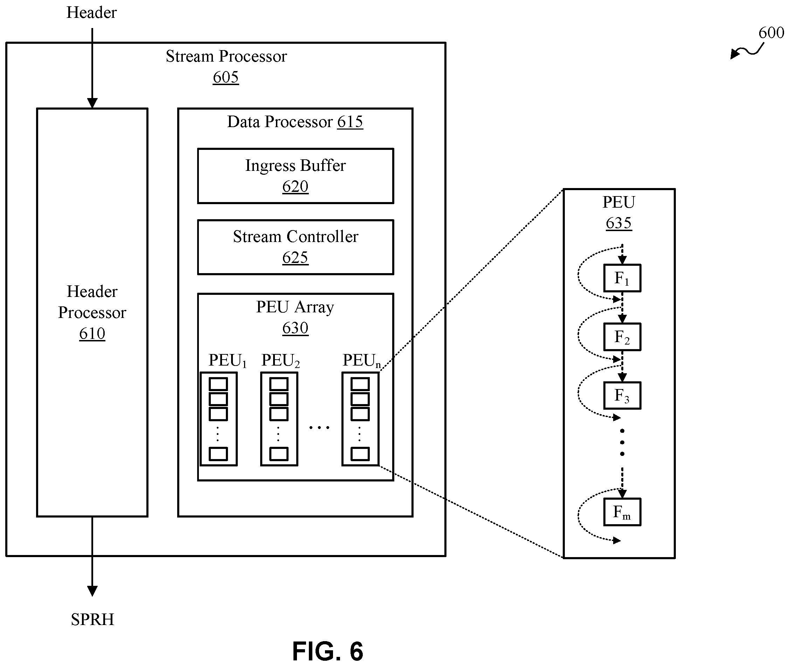

**FIG. 6** illustrates an example system 600 in accordance with one or more implementations as described herein. In some configurations, one or more aspects of system 600 may be implemented by or in conjunction with stream processor 140 of FIG. 1, stream processor 230 of FIG. 2, stream processor 395 of FIG. 3, and/or stream processor 465 of FIG. 4. In some configurations, one or more aspects of system 600 may be implemented by or in conjunction with machine 105, components of machine 105, or any combination thereof.

System 600 may be part of a host system (e.g., machine 105). In some cases, system 600 may be part of a system on chip (SoC). In the illustrated example, system 600 may include stream processor 605, which may include header processor 610 and data processor 615. System 600 may depict aspects of a VPoM stream processor architecture. Header processor 610 may manage behavior of data processor 615 (e.g., data stream processor), and data processor 615 may execute a function of a memory transaction request and update header fields based on a result of the execution.

In some examples, stream processor 605 may depict a stream processor of a host (e.g., stream processor 465 of FIG. 4) and/or depict a stream processor of a switch (e.g., stream processor 395 of CXL switch 310). System 600 may be part of a stream processor architecture that includes header processor 610 and data processor 615. Header processor 610 may be configured to manage the behavior of data processor 615. Data processor 615 may be configured to execute a given function and/or update header fields (e.g., of header 505, of a stream processing result header (SPRH)). The systems and methods described may include processes to configure which stream processing functions to execute, when to execute them, how to configure execution of a function, what data to execute a function on, etc.

In some examples, header processor 610 may process data and/or metadata included in a message header (e.g., a header of a packet, a header of a memory transaction request, header 505). Data processor 615 may process data and/or metadata included in one or more data fields of a message (e.g., data included in a data field of a packet, data included in a data field of a memory transaction request, data field 510). In some cases, data processor 615 may execute a function based on information from header 505 (e.g., stream processing configuration information).

As shown, data processor 615 may include ingress buffer 620, stream controller 625, and a parallel execution unit (PEU) array 630 (e.g., array of processor elements, array of processor units, array of AI accelerators, etc.). In some examples, header processor 610 may configure which functions are executed by data stream processor 615 based on information specified in the data stream header (e.g., header 505). As shown, PEU array 630 may include one or more PEUs (e.g., "n" PEUs where "n" is a positive integer; n=2; n=4; n=8; n=16; n=32, etc.). As shown, PEU array 630 may include PEU 635. As shown, PEU 635 may execute one or more functions. In some cases, PEU 635 may include a queue of one or more functions executed by PEU 635. In the illustrated example, PEU 635 may execute m functions from function 1 to function m. In some cases, a result of function 1 may be used by function 2, and so on.

In some examples, ingress buffer 620 may store (e.g., temporarily store) one or more incoming packets (e.g., one or more packets of one or more memory transaction requests). In some cases, ingress buffer 620 may store one or more incoming packets to be processed by PEU array 630. Ingress buffer 620 may temporarily hold the incoming packets while PEU array 630 is busy executing data from other packets. Thus, ingress buffer 620 may prevent input packet loss and allow for efficient packet management. In some cases, data processor 615 may include an egress buffer that may temporarily hold outgoing packets to avoid output packet loss.

In some examples, stream controller 625 may provide stream interleaving and/or stream separation operations associated with a given data stream. For example, stream controller 625 may interleave and/or separate functions executing on PEUs of PEU array 630. Based on stream processing performance policy 560, stream controller 625 may determine how to use PEUs of PEU array 630. In some cases, stream controller 625 may use all of the PEUs of PEU array 630 to execute a function. In some cases, stream controller 625 may distribute stream functions among the PEUs of PEU array 630. For example, stream controller 625 may use a first portion of the PEUs of PEU array 630 to execute a first function and use a second portion of the PEUs of PEU array 630 to execute a second function.

Based on information in stream processing performance policy 560 defined in header 505, stream controller 625 may determine how PEUs of PEU array 630 are assigned to the execution of one or more functions of one or more memory transaction requests. When stream processing performance policy 560 is set to Throughput-Maximization, then stream controller 625 may operate in an Interleaving mode (e.g., a function executed across multiple PEUs, or executed across all PEUs). When stream processing performance policy 560 is set to Performance-Isolation, then stream controller 625 may operate in a Stream Separation mode (e.g., a first function executed across a first portion of PEU array 630 and a second function executed across a second portion of PEU array 630, the second portion not overlapping with the first portion). A PEU of PEU array 630 (e.g., PEU 635) may enable selection of one or multiple functions to execute. When multiple functions are selected, the PEU may provide chained execution of selected functions, which may be configured by function information specified by stream processing function 545.

Accordingly, stream processor 605 may provide stream processing capability to VPoM systems. Header processor 610 may configure what stream processing functions to execute, how to execute them, data format of input/output data, address of input/output data, etc. Header processor 610 may determine and select an optimal way to assign PEUs of PEU array 630 (e.g., for throughput and/or for performance isolation). Header processor 610 may determine and select an optimal processing location based on an associative property (e.g., indicated in stream processing performance policy 560), a ratio of data input/output size, etc.

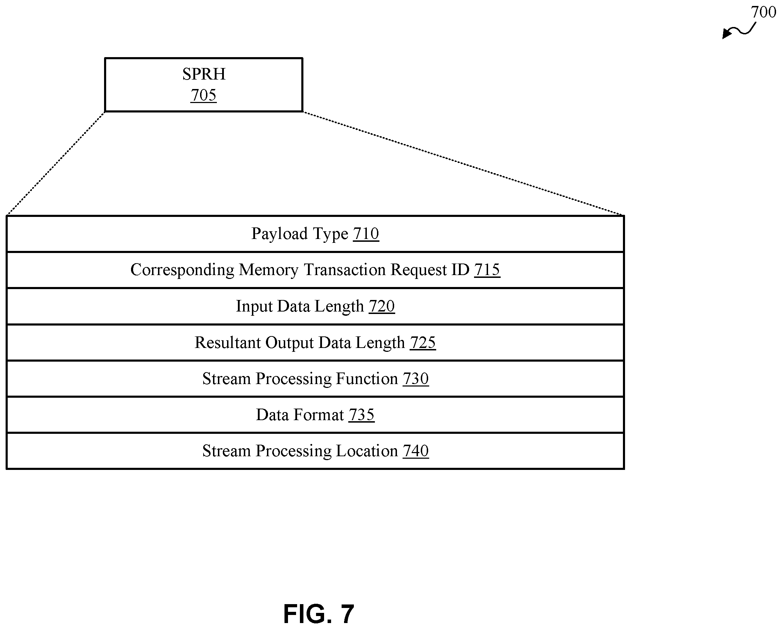

**FIG. 7** illustrates an example data structure 700 in accordance with one or more implementations as described herein. In some configurations, one or more aspects of data structure 700 (e.g., processing of data structure 700) may be implemented by or in conjunction with stream processor 140 of FIG. 1, stream processor 230 of FIG. 2, stream processor 395 of FIG. 3, and/or stream processor 465 of FIG. 4. In some configurations, one or more aspects of data structure 700 (e.g., processing of data structure 700) may be implemented by or in conjunction with machine 105, components of machine 105, or any combination thereof.

In the illustrated example, data structure 700 may include stream processing result header (SPRH) 705. In some cases, SPRH 705 may be a field of data structure 500. Additionally, or alternatively, SPRH 705 may be a field of different data structure or a field of another message (e.g., a result message communicated to a destination device). In some examples, header processor 610 may create and/or update a SPRH field (e.g., SPRH 705) based on a result of stream processing (e.g., based on executing a stream processing function).

In some examples, SPRH 705 may include one or more fields. As shown, SPRH 705 may include at least one of the following fields: payload type 710, corresponding memory transaction request ID 715, input data length 720, resultant output data length 725, stream processing function specifier 730, data format specifier 735, and/or stream processing location 740.

In some cases, payload type 710 may indicate a type of payload or type of output data or stream processing result associated with SPRH 705 (e.g., file type, format type, function type, etc.). In some cases, corresponding memory transaction request ID 715 may indicate an identifier of a memory transaction request corresponding to an SPRH (e.g., SPRH 705) that results from processing the memory transaction request. Information included in SPRH 705 may be used to match stream processing resultant data (e.g., output data) with a corresponding VPoM memory transaction request (e.g., based on information in corresponding memory transaction request ID 715). Additionally, or alternatively, information included in SPRH 705 may be used to verify a processing result (e.g., a result of executing a stream processing function).

In some examples, input data length 720 may indicate a data size of input data. For example, input data length 720 may include a field of SPRH 705 that includes information indicating a length of input data. In some cases, input data length 720 may indicate a length of input data (e.g., input data stream) of a memory transaction request. In some cases, input data length 720 may be based on input data length 530.

In some examples, resultant output data length 725 may indicate a data size of output data. For example, resultant output data length 725 may include a field of SPRH 705 that includes information indicating a length of output data. In some cases, resultant output data length 725 may indicate a length of output data (e.g., output data stream) of a memory transaction request. For example, resultant output data length 725 may indicate a length of an output data stream after stream processing completes.

In some examples, stream processing function 730 may specify a function to execute in relation to a memory transaction request (e.g., specify one or more functions to be performed on input data). In some cases, stream processing function 730 may provide a list of supported stream processing functions. In some cases, stream processing function 730 may include a uniform resource locator (URL) to specify a function. Additionally, or alternatively, stream processing function 730 may include an identifier or index to specify a function. In some cases, stream processing function 730 may be based on stream processing function 545.

In some examples, data format 735 may provide a unit data format for stream processing. In some cases, data format 735 may provide a list of data formats supported for stream processing (e.g., integer (INT), floating point (FP), INT4, INT8, FP4, FP8, FP16, FP32, etc.). Data format 735 may specify a format of input data, a format of output data, a format conversion to be performed on the input data and/or on the output data, etc. In some examples, data format 735 may be based on data format 550.

In some examples, stream processing location 740 may include a location indicator that indicates a location for executing a stream processing function or a location where a stream processing function was executed. In some cases, stream processing location 740 may specify Source, Destination, or Switch. For example, stream processing location 740 may indicate executing a function at a source of the input data stream (e.g., host 315, host 320), at a destination of an output data stream (e.g., host 315, host 320), or at a switch that processes data communication between the source of the input data stream and the destination of the output data stream (e.g., CXL switch 310). In some cases, stream processing location 740 may be based on stream processing location 555.

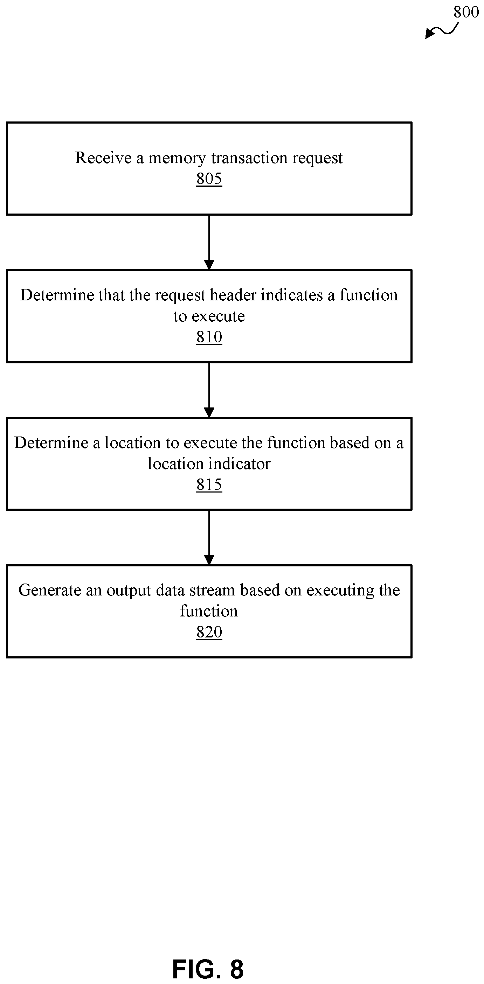

**FIG.** 8 depicts a flow diagram illustrating an example method 800 associated with the disclosed systems, in accordance with example implementations described herein. In some configurations, one or more aspects of method 800 may be implemented by or in conjunction with stream processor 140 of FIG. 1, stream processor 230 of FIG. 2, stream processor 395 of FIG. 3, stream processor 465 of FIG. 4, and/or stream processor 605 of FIG. 6. In some configurations, one or more aspects of method 800 may be implemented by or in conjunction with machine 105, components of machine 105, or any combination thereof. The depicted method 800 is just one implementation and one or more operations of method 800 may be rearranged, reordered, omitted, and/or otherwise modified such that other implementations are possible and contemplated.

At 805, method 800 may include receiving a memory transaction request. For example, a device may receive a memory transaction request that includes a request header and an input data stream. In some cases, the memory transaction request may be received by a host (e.g., host 315, host 320) and/or a switch (e.g., CXL switch 310).

At 810, method 800 may include determining that the request header indicates a function to execute. For example, a stream processor of the device may determine that the request header indicates a function to execute based on the input data stream, the function being executed via at least one of a set of execution units (e.g., parallel execution units) of the device.

At 815, method 800 may include determining a location to execute the function based on a location indicator. For example, the stream processor of the device may determine a location to execute the function based on a location indicator of the request header, the location indicator indicating a source (e.g., source device) of the input data stream, a destination (e.g., destination device) of an output data stream, or a switch that processes data communication between the source of the input data stream and the destination of the output data stream. In some cases, a first device may perform one or more operations of method 800. In some cases, a second device may perform one or more operations of method 800. For example, a first device may determine a location to execute the function and the first device may transfer execution of the function to a second device.

At 820, method 800 may include generating an output data stream based on executing the function. For example, the stream processor of the device may generate the output data stream based on executing the function according to the request header.

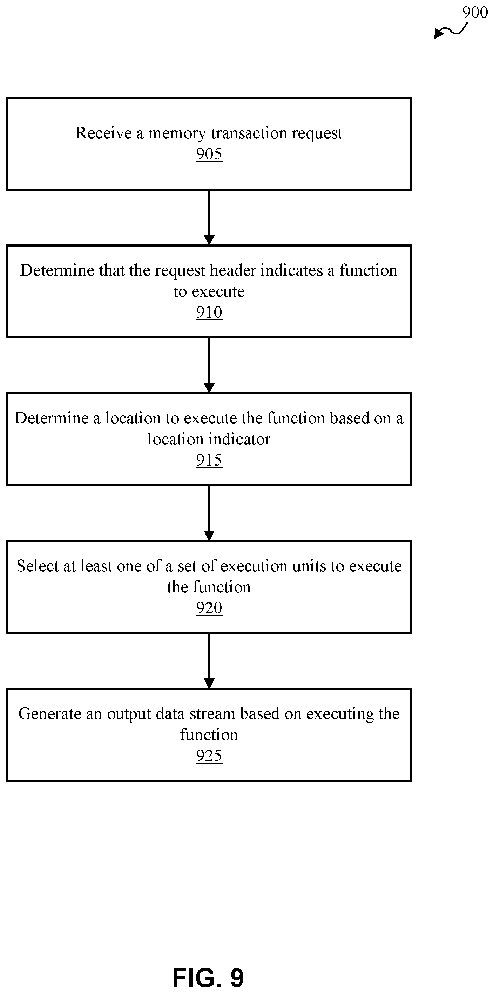

**FIG. 9** depicts a flow diagram illustrating an example method 900 associated with the disclosed systems, in accordance with example implementations described herein. In some configurations, one or more aspects of method 900 may be implemented by or in conjunction with stream processor 140 of FIG. 1, stream processor 230 of FIG. 2, stream processor 395 of FIG. 3, stream processor 465 of FIG. 4, and/or stream processor 605 of FIG. 6. In some configurations, one or more aspects of method 900 may be implemented by or in conjunction with machine 105, components of machine 105, or any combination thereof. The depicted method 900 is just one implementation and one or more operations of method 900 may be rearranged, reordered, omitted, and/or otherwise modified such that other implementations are possible and contemplated.

At 905, method 900 may include receiving a memory transaction request. For example, a device may receive a memory transaction request that includes a request header and an input data stream. In some cases, the memory transaction request may be received by a host (e.g., host 315, host 320) and/or a switch (e.g., CXL switch 310).

At 910, method 900 may include determining that the request header indicates a function to execute. For example, a stream processor of the device may determine that the request header indicates a function to execute based on the input data stream, the function being executed via at least one of a set of execution units (e.g., parallel execution units) of the device.

At 915, method 900 may include determining a location to execute the function based on a location indicator. For example, the stream processor of the device may determine a location to execute the function based on a location indicator of the request header, the location indicator indicating a source (e.g., source device) of the input data stream, a destination (e.g., destination device) of an output data stream, or a switch that processes data communication between the source of the input data stream and the destination of the output data stream. In some cases, a first device may perform one or more operations of method 900. In some cases, a second device may perform one or more operations of method 900. For example, a first device may determine a location to execute the function and the first device may transfer execution of the function to a second device.

At 920, method 900 may include selecting at least one of the set of execution units to execute the function based on a performance policy of the request header. For example, the stream processor of the device may select the entire set of execution units of the device to execute the function based on the performance policy. In some cases, based on the performance policy, the stream processor of the device may select a first portion of the execution units to execute the function and may select a second portion of the execution units to execute a second function.

At 925, method 900 may include generating an output data stream based on executing the function. For example, the stream processor of the device may generate the output data stream based on executing the function according to the request header.

In the examples described herein, the configurations and operations are example configurations and operations, and may involve various additional configurations and operations not explicitly illustrated. In some examples, one or more aspects of the illustrated configurations and/or operations may be omitted. In some embodiments, one or more of the operations may be performed by components other than those illustrated herein. Additionally, or alternatively, the sequential and/or temporal order of the operations may be varied.

Certain embodiments may be implemented in one or a combination of hardware, firmware, and software. Other embodiments may be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wired and/or wireless communication device such as a switch, router, network interface controller, cellular telephone, smartphone, tablet, netbook, wireless terminal, laptop computer, a femtocell, High Data Rate (HDR) subscriber station, access point, printer, point of sale device, access terminal, or other personal communication system (PCS) device. The device may be wireless, wired, mobile, and/or stationary.

As used within this document, the term "communicate" is intended to include transmitting, or receiving, or both transmitting and receiving. Similarly, the bidirectional exchange of data between two devices (both devices transmit and receive during the exchange) may be described as 'communicating', when only the functionality of one of those devices is being claimed. The term "communicating" as used herein with respect to wired and/or wireless communication signals includes transmitting the wired and/or wireless communication signals and/or receiving the wired and/or wireless communication signals. For example, a communication unit, which is capable of communicating wired and/or wireless communication signals, may include a wired/wireless transmitter to transmit communication signals to at least one other communication unit, and/or a wired/wireless communication receiver to receive the communication signal from at least one other communication unit.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems following one or more wireless communication protocols, for example, Radio Frequency (RF), Infrared (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{™}, Global Positioning System (GPS), Wi-Fi, Wi-Max, ZigBee^{™}, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

Although an example processing system has been described above, embodiments of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more components of computer program instructions, encoded on computer storage medium for execution by, or to control the operation of, information/data processing apparatus. Alternatively, or in addition, the program instructions can be encoded on an artificially-generated propagated signal, for example a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (for example multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, for example an FPGA (field programmable gate array) or an ASIC (application-specific integrated circuit). The apparatus can also include, in addition to hardware, code that creates an execution environment for the computer program in question, for example code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a component, subroutine, object, or other unit suitable for use in a computing environment. A computer program may, but need not, correspond to a file in a file system. A program can be stored in a portion of a file that holds other programs or information/data (for example one or more scripts stored in a markup language document), in a single file dedicated to the program in question, or in multiple coordinated files (for example files that store one or more components, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, for example magnetic, magneto-optical disks, or optical disks. However, a computer need not have such devices. Devices suitable for storing computer program instructions and information/data include all forms of non-volatile memory, media and memory devices, including by way of example semiconductor memory devices, for example EPROM, EEPROM, and flash memory devices; magnetic disks, for example internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, for example a CRT (cathode ray tube) or LCD (liquid crystal display) monitor, for displaying information/data to the user and a keyboard and a pointing device, for example a mouse or a trackball, by which the user can provide input to the computer. Other kinds of devices can be used to provide for interaction with a user as well; for example, feedback provided to the user can be any form of sensory feedback, for example visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, for example as an information/data server, or that includes a middleware component, for example an application server, or that includes a front-end component, for example a client computer having a graphical user interface or a web browser through which a user can interact with an embodiment of the subject matter described herein, or any combination of one or more such back-end, middleware, or front-end components. The components of the system can be interconnected by any form or medium of digital information/data communication, for example a communication network. Examples of communication networks include a local area network ("LAN") and a wide area network ("WAN"), an inter-network (for example the Internet), and peer-to-peer networks (for example ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (for example an HTML page) to a client device (for example for purposes of displaying information/data to and receiving user input from a user interacting with the client device). Information/data generated at the client device (for example a result of the user interaction) can be received from the client device at the server.

While this specification contains many specific embodiment details, these should not be construed as limitations on the scope of any embodiment or of what may be claimed, but rather as descriptions of features specific to particular embodiments. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain embodiments, multitasking and parallel processing may be advantageous.

## Claims

1. A method of stream processing, the method comprising:
receiving, at a device, a memory transaction request that includes a request header and an input data stream;
determining that the request header indicates a function to execute based on the input data stream, the function being executed via at least one of a set of execution units of the device;
determining a device location to execute the function based on a location indicator of the request header, the location indicator indicating a source device of the input data stream, a destination device of an output data stream, or a switch that processes data communication between the source device of the input data stream and the destination device of the output data stream; and
generating the output data stream based on executing the function according to the request header.

2. The method of claim 1, wherein:
the input data stream includes one or more values, and
the function includes determining at least one of a maximum value of the one or more values, a minimum value of the one or more values, an average value of the one or more values, at least one value of the one or more values that satisfies an inequality indicated in the request header, or a value of the input data stream that equals a value indicated in the request header.

3. The method of claim 1 or 2, wherein the function includes performing at least one of an encryption operation on at least a portion of the input data stream, a decryption operation on at least the portion of the input data stream, or a data integrity checksum on at least the portion of the input data stream.

4. The method of any one of claims 1 to 3, further comprising selecting the source device of the input data stream as the location to execute the function based on a performance policy of the request header indicating a traffic reduction policy.

5. The method of any one of claims 1 to 4, further comprising selecting the source device of the input data stream as the location to execute the function based on a property of the request header indicating an order of execution for a first operation and a second operation, and
the first operation or the second operation being associated with the function or a second function.

6. The method of any one of claims 1 to 5, further comprising selecting the destination device of the output data stream as the location to execute the function based on the function being performed on at least a majority of values included in the input data stream.

7. The method of any one of claims 1 to 6, further comprising selecting the switch as the location to execute the function based on the function including at least one of an all reduce operation or an operation to communicate the output data stream to multiple destinations, and
wherein at least a portion of a functionality of the switch is based on a cache coherent protocol.

8. The method of any one of claims 1 to 7, wherein:
the device comprises the source device of the input data stream, the destination device of the output data stream, or the switch,
the source device of the input data stream comprises a source host, and
the destination device of the output data stream comprises a destination host.

9. The method of any one of claims 1 to 8, further comprising splitting execution of the function across the set of execution units based on a performance policy of the request header indicating a throughput policy.

10. The method of any one of claims 1 to 9, further comprising:
using a first subset of the set of execution units to execute the function based on a performance policy of the request header indicating a performance policy, and
optionally: using a second subset of the set of execution units to execute a second function based on the performance policy of the request header implementing the performance policy, wherein the second subset is different from the first subset.

11. The method of any one of claims 1 to 10, further comprising determining, based on a format indicator of the request header, a format to implement on at least a portion of the input data stream.

12. The method of any one of claims 1 to 11, further comprising determining that the request header indicates an amount of memory to allocate for stream processing based on an output data length indicated in the request header.

13. The method of any one of claims 1 to 12, further comprising:
determining an input data location associated with the input data stream based on an input data offset indicated in the request header, and/or
determining an output data location associated with the output data stream based on an output data offset indicated in the request header.

14. A device comprising:
one or more processors; and
memory storing instructions that, when executed by the one or more processors, cause the device to perform the method or the steps therein according to any one of the previous claims.

15. A computer program or a computer-readable medium comprising the computer program, which, when executed by a computer, cause the computer to carry out the method of any one of the previous claims or the steps thereof.
